# EUROPÄISCHE PATENTSCHRIFT

(11) **EP 1 618 732 B1**
(45) Veröffentlichungstag und Bekanntmachung des Hinweises auf die Patenterteilung: **27.02.2008**
(21) Anmeldenummer: 04725934.6
(22) Anmeldetag: 06.04.2004
(51) Int. Cl.: H04M 1/725, H04M 1/247, G06F 17/30

(54) **VERFAHREN ZUM ERFASSEN DER NUTZUNGSHÄUFIGKEIT DER MENÜPUNKTE EINES MOBILFUNKENDGERÄTES UND ZUM AUTOMATISCHEN ANPASSEN DER MENÜSTRUKTUR**
METHOD FOR DETECTING THE FREQUENCY OF USING MENU ITEMS OF A MOBILE TELEPHONE TERMINAL AND ADAPTING THE MENU STRUCTURE
PROCEDE POUR DETECTER LA FREQUENCE D'UTILISATION DES COMMANDES DE MENU D'UN TERMINAL DE TELEPHONIE MOBILE ET POUR ADAPTER AUTOMATIQUEMENT LA STRUCTURE DE MENU

(30) Priorität: 15.04.2003 DE 10317563
(43) Veröffentlichungstag der Anmeldung: 25.01.2006
(73) Patentinhaber: Vodafone Holding GmbH, 40213 Düsseldorf (DE)
(72) Erfinder: GAIDA, Klemens, 40213 Düsseldorf (DE); STEIN, Silke, 64683 EINHAUSEN (DE)
(74) Vertreter: Weisse, Renate
(86) Internationale Anmeldenummer: PCT/EP2004/003682
(87) Internationale Veröffentlichungsnummer: WO 2004/093417

(56) Entgegenhaltungen:
- EP-A- 0 891 066
- EP-A- 1 094 410
- US-B1- 6 263 217
- LEONARD L S: "OPERATION MODIFIED BY LOCATION AND TIME OF DAY" RESEARCH DISCLOSURE, KENNETH MASON PUBLICATIONS, HAMPSHIRE, GB, Nr. 439, 1. November 2000 (2000-11-01), Seite 1925, XP001009303 ISSN: 0374-4353

## Beschreibung

### Technisches Gebiet

Die Erfindung betrifft ein Verfahren beim Betreiben eines Mobilfunknetzes mit menügesteuerten Mobilfunkendgeräten, bei denen eine hierarchische Menüführung mit Menüpunkten als Mobilfunk-Portal in einer computergesteuerten Zentraleinheit verwaltet wird, die Auswahl eines jeden Menüpunkts des Mobilfunk-Portals in der Zentraleinheit zum Erfassen und Auswerten des Nutzungsverhaltens von Nutzern des menügesteuerten Mobilfunk-Portals aufgezeichnet wird, und die hierarchische Menüführung nutzerindividuell durch das so erfasste Nutzungsverhalten angepasst wird.

### Stand der Technik

Mobilfunknetze, insbesondere nach dem GSM- oder UMTS-Standard, sind hinlänglich bekannt. Es ist wünschenswert, den Teilnehmern bzw. Nutzern von Mobilfunknetzen die Bedienung von Mobilfunkendgeräten möglichst leicht zu machen. Die Mobilfunkendgeräte werden daher über Menüs bedient. Die Funktionen des Mobilfunkendgeräts werden über eine Anzeige als hierarchisches Menü dargestellt, von dem sich der Nutzer den gewünschten Menüpunkt mit Hilfe der Tastatur des Mobilfunkendgeräts aussuchen kann.

Es ist bekannt, die Menüs in so genannten Mobilfunk-Portalen zu vereinheitlichen und zentral zu verwalten. Unter einem Mobilfunk-Portal ist im Folgenden eine Menüführung zu verstehen, die durch einen Betreiber eines Mobilfunknetzes vorgebbar ist. Die einzelnen Menüpunkte sind mit Funktionen des Mobilfunkendgeräts oder mit Dienstleistungen, wie beispielsweise Hotel-, Verkehrs- oder Kulturinformationen, belegt. Die Ansteuerung dieser Menüpunkte erfolgt derzeit über ein geeignetes Bedienerfeld bzw. über eine Tastatur. Üblicherweise erscheint das Mobilfunk-Portal beim Benutzen des Mobilfunkendgeräts auf der Anzeige.

Das Mobilfunk-Portal wird in einer zentralen Steuer- und Verwaltungseinheit eingestellt und verwaltet und den Mobilfunkendgerätebenutzern zur Nutzung übermittelt. Das Mobilfunk-Portal wird durch den Mobilfuttkbetreiber so eingestellt, wie er glaubt, dass es vernünftig und richtig sei. Oft werden aber bestimmte Menüpunkte gar nicht oder nur zu bestimmten Tageszeiten ausgewählt. Davon erhält der Betreiber aber keine unmittelbaren Kenntnisse. Es sind derzeit keine Möglichkeiten für den Mobilfunknetzbetreiber gegeben, das Nutzungsverhalten auszuwerten. Dies lässt sich ggf. nur mit kostenintensiven statistischen Erhebungen bei den Mobilfunkendgerätenutzem feststellen. Die Resultate sind dabei nicht aktuell und unterliegen immer statistischen Schwankungen.

Die EP 1094410 A2 offenbart eine benutzerindividuelle Anpassung eines Menüs für menügesteuerte Endgeräte. Mit Zählern wird die Häufigkeit der Auswahl durch einen Benutzer für jeden Menüpunkt ermittelt. Entsprechend der Häufigkeit der Auswahl wird die Reihenfolge der Menüpunkte in dem Menü automatisch festgelegt. Dabei sind in einer Ausbildung die Zähler und eine Auswertung für alle Endgeräte zentral vorgesehen. Die jeweils ermittelten Menüpunktreihenfolgen werden periodisch an die Endgeräte übermittelt.

Die EP 891066 A2 und die US 6263217 B1 beschreiben ebenfalls eine benutzerindividuelle Anpassung von Menüs zur Steuerung von Mobilfunkendgeräten. Je nach Auwahlhäufigkeit wird die Reihenfolge von Menüpunkten in den Menüs automatisch verändert. Dazu sind Mittel in den Mobilfunkendgeräten vorgesehen. Eine zentrale Auswertung und eine Übermittlung von Menüpunktreihenfolgen von einer Zentrale an die Mobilfunkendgeräte werden nicht beschrieben.

In "Operation modified by location and time", W. H. Collins, Research Disclosure, RD 439045, November 2000, Kenneth Mason Publications Ltd., Hampshire, GB wird ein Verfahren zum Betreiben eines Mobilfunktelefons beschrieben, bei dem Betriebszustände eines Mobilfunktelefons in Abhängigkeit vom Ort und der Zeit modifiziert werden. Beispielsweise wird eine Hintergrundbeleuchtung je nach Zeit und Ort automatisch an- oder ausgeschaltet. Auch eine Anpassung von Alarmzeiten bei einem Wechsel zwischen verschiedenen Zeitzonen ist möglich. Ein zentral verwaltetes Mobilfunkportal wird dabei nicht verwendet.

### Offenbarung der Erfindung

Aufgabe der Erfindung ist es daher, ein Verfahren für Mobilfunknetze zu Schaffen, um aktuelle und exakte Daten über das Nutzungsverhalten von menügesteuerten Mobilfunk-Portalen zur Auswertung zu erhalten und das zentral verwaltete Mobilfunk-Portal nutzerfreundlicher zu gestalten.

Erfindungsgemäß wird die Aufgabe mit einem Verfahren beim Betreiben eines Mobilfunknetzes mit menügesteuerten Mobilfunkendgeräten der eingangs genannten Art gelöst, bei dem der Auswahl eines Menüpunkts ein Zeitwert und/oder eine Ortkoordinate zugeordnet wird, wobei die Anpassung der hierarchischen Menüführung durch Verschiebung eines Menüpunkts (26) in Hierarchieebenen des Menüs zeit- und/oder ortsabhängig erfolgt.

Das erfindungsgemäße Verfahren beruht auf dem Prinzip, das Nutzungsverhalten und Gewohnheiten eines Benutzers beim Umgang mit seinem Mobilfunkendgerät unmittelbar zu speichern, um die so gespeicherten Nutzungsdaten auswerten zu können. Die Nutzungsdaten werden nun nicht mehr statistisch erhoben, sondern lassen sich unmittelbar und korrekt feststellen.

Das erfindungsgemäße Verfahren passt die Menüführung individuell durch das Nutzungsverhalten an. Es besteht damit die Möglichkeit, das Mobilfünk-Portal nicht für alle gleichzeitig in der gleichen Form zu ändern, sondern jedem Nutzer individuell sein eigenes Mobilfunk-Portal nach seinem eigenen Nutzungsverhalten unzubieten. Hierfür können geeignete Algorithmen in der zentralen Steuer- und Verwaltungseinheit vorgesehen sein, die diesen Vorgang weitestgehend automatisieren.

Bei dem erfindungsgemäßen Verfahren wird bei jeder Auswahl eines Menüpunkts ein Zeitwert und/oder eine Ortkoordinate zugeordnet. Der Zeitwert kann ein Datum sein, aber auch die genaue Uhrzeit bzw. eine Kombination daraus. Hieraus lässt sich beispielsweise feststellen, welches Menü eines Mobilfunk-Portals zu welcher Tageszeit am häufigsten genutzt wird. Analog zum Zeitwert kann auch der Ort bzw. eine Ortkoordinate aufgezeichnet werden. Entsprechend kann der Mobilfunkbetreiber reagieren. Er kann diese Menüpunkte in der Menühierarchie nach Bedarf verschieben. Zur Mittagszeit lassen sich z.B. so leicht Restaurants aus der Umgebung ermitteln. Der Menüpunkt wird in der Mittagszeit in der Hierarchie ganz oben angesiedelt sein. Dieser Menüpunkt wird aber am Vor- oder Nachmittag wahrscheinlich weniger benötigt. In diesen Zeiten kann der Menüpunkt in eine untere Hierarchieebene des Menüs verlegt werden.

In einer bevorzugten Ausbildung des erfindungsgemäßen Verfahrens wird das Nutzungsverhalten numerisch und/oder grafisch ausgewertet. Durch diese Maßnahme lässt sich die Auswertung des Nutzungsverhaltens durch den Betreiber eines Mobilfunknetzes leichter vornehmen.

Vorteilhafterweise sind die am häufigsten benutzen Menüpunkte der hierarchischen Menüführung für den Nutzer zuerst erreichbar.

Weitere Vorteile ergeben sich aus dem Gegenstand der Unteransprüche sowie der Zeichnung mit der dazugehörigen Beschreibung.

### Kurze Beschreibung der Zeichnung

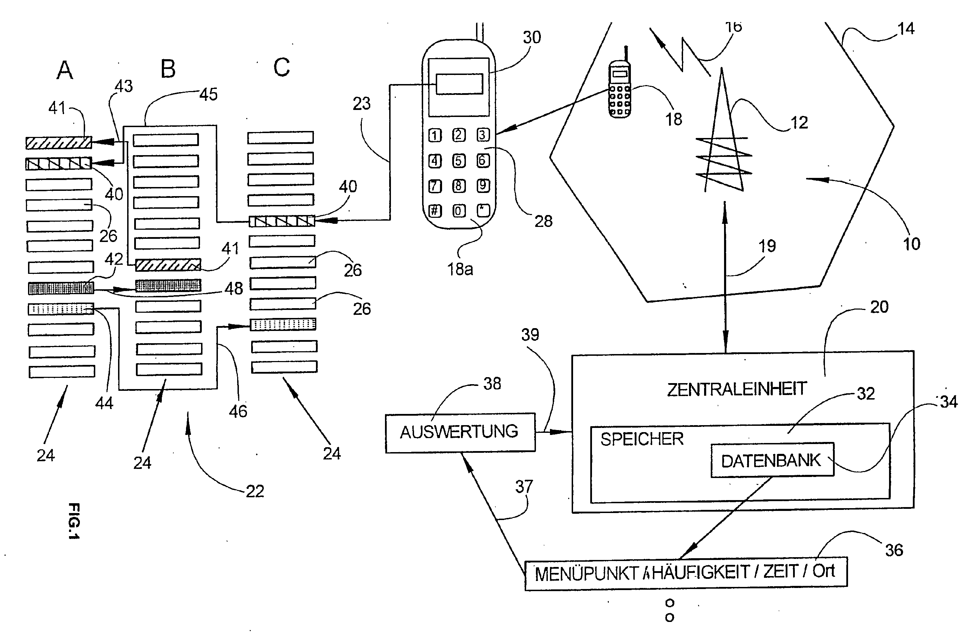

- Fig.1: zeigt in einer Prinzipskizze den schematischen Ablauf des erfindungsgemäßen Verfahrens.

### Bevorzugtes Ausführungsbeispiel

In Fig. 1 wird in einer Prinzipskizze der schematische Ablauf des erfindungsgemäßen Verfahrens dargestellt. Mit 10 wird ein Mobilfunknetz bezeichnet, welches durch einen Funkmast 12 und eine Wabe 14 symbolisiert wird. Über Funk - Pfeil 16 - vermittelt das Mobilfunknetz 10 Kommunikationsanfragen durch Mobilfunkteilnehmer. Die Mobilfunkteilnehmer werden durch ein Mobilfunkendgerät 18 symbolisch dargestellt. Dieses Mobilfunkendgerät 18 ist stellvertretend für alle Mobilfunkteilnehmer abgebildet und nochmals als vergrößerte Projektion 18a dargestellt.

Das Mobilfunknetz 10 wird durch eine computergestützte Zentraleinheit 20 verwaltet und gesteuert. Die Zentraleinheit 20 übernimmt insbesondere die Vermittlung von Kommunikationsanfragen zwischen Kommunikationspartnern. Ferner stellt die Zentraleinheit 20 ein menügesteuertes Mobilfunk-Portal 22 bereit, welches über das Mobilfunknetz 10 an die Mobilfunkendgeräte 18 übermittelt wird. Pfeil 19 deutet die bidirektionale Verbindung der Zentraleinheit 20 zu den Mobilfunkendgeräten 18 an.

Unter dem Mobilfunk-Portal 22 ist eine hierarchische Menüführung 24 zu verstehen, die der Betreiber des Mobilfunknetzes 10 vorgibt. Die Menüführung 24 verfügt im vorliegenden Ausführungsbeispiel über drei Hierarchieebenen A, B, C. Einzelne Menüpunkte 26 sind mit Funktionen des Mobilfunkendgeräts oder mit Dienstleistungen, wie beispielsweise Hotel-, Verkehrs- oder Kulturinformationen, belegt. Die Ansteuerung dieser Menüpunkte 26 erfolgt über ein geeignetes Bedienerfeld 28 des Mobilfunkendgeräts 18a. Das Mobilfunkendgerät 18a verfügt über eine Anzeige 30, auf der das Mobilfunk-Portal 22 erscheint. Wegen der begrenzten Größe der Anzeige 30 des Mobilfunkendgeräts werden überwiegend hierarchische Menüführungen 24 als Mobilfunk-Portale 22 von den Mobilfunknetzbetreibern verwendet. Die Auswahl eines Menüpunkts 40 des Mobilfunk-Portals wird vorliegend mit Pfeil 23 symbolisiert.

Die Zentraleinheit 20 verfügt ferner über einen Speicher 32, in dem eine Datenbank 34 abgelegt ist. Die Datenbank 34 besteht aus Datensätzen 36, wobei jedem Datensatz 36 ein Teilnehmer des Mobilfunknetzes 10 zugeordnet wird. In jedem Datensatz 36 der Datenbank 34 wird gespeichert, welcher Menüpunkt 26 wie oft über das Mobilfunkendgerät 18a und zu welcher Zeit bzw. an welchem Ort ausgewählt wurde. Anhand dieser so gewonnenen Daten kann das Nutzungsverhalten eines jeden Mobilfunkteilnehmers mit seinem Mobilfunkendgerät 18a erfasst werden. Kasten 38 bildet die Auswertung. Der Weg vom Bilden eines Datensatzes 36 zur Auswertung 38 wird mit Pfeil 37 angedeutet. Die Auswertung 38 dient insbesondere dazu, individuelle Benutzerprofile zu erstellen, so dass jeder Mobilfunkteilnehmer möglichst ein individuelles Mobilfunk-Portal 22 erhält. Die Resultate der Auswertung 38 in Form von individuellen Mobilfunk-Portalen werden wiederum von der Zentraleinheit 20 über das Mobilfunknetz 10 an die jeweiligen Mobilfunkendgeräte 18 weitergeleitet, Pfeile 39, 19.

Im vorliegenden Ausführungsbeispiel ist A die oberste, B die mittlere und C die unterste Hierarchieebene. Menüpunkte 40 bzw. 41 der unteren Hierarchieebenen B, C der Menüführung 24 sind nur erreichbar, indem der Mobilfunkteilnehmer sich durch die jeweils oberen Hierarchieebenen A bzw. A und B hindurchbewegt. Das Erreichen des gewünschten Menüpunkts 40, 41 ist daher normalerweise sehr umständlich, langwierig und bedienerunfreundlich. Die Menüpunkte 40, 41 werden deshalb bei einer vorher festgelegten Auswahlhäufigkeit bis in die oberste Hierarchieebene A verschoben, Pfeile 43, 45. Der Menüpunkt 40 ist somit schneller erreichbar und das Mobilfunk-Portal 22 wird hierdurch bedienerfreundlicher. Menüpunkte 42, 44, die ein Teilnehmer nicht interessieren und daher wenig bis gar nicht genutzt werden, werden hingegen in tiefere Hierarchieebenen B bzw. C der Menüführung 24 verschoben, was mit Pfeilen 46, 48 angedeutet wird.

Das erfindungsgemäße Verfahren sieht insbesondere vor, dass die Menüpunkte 40, bzw. 41, 42, 44 auch nur zeitlich begrenzt die Hierarchieebenen A, B, C wechseln. Je nach dem, zu welcher Uhrzeit ein bestimmter Menüpunkt 26, z.B. Menüpunkt 41, besonders häufig verwendet wurde, wird er nur für eine begrenzte Zeit in eine höhere Hierarchieebene. A verschoben. Grundsätzlich kann in jedem Datensatz 36 der Datenbank 34 auch der Ort gespeichert werden. Die Verschiebung eines Menüpunkts 26 kann somit auch ortsabhängig gemacht werden. Wenn beispielsweise ein Mobilfunkteilnehmer nur an einem bestimmten Ort einen bestimmten Menüpunkt 40 auswählt, wird dieser Menüpunkt 40 auch nur an diesem Ort und ggf. nur zu einer bestimmten Zeit in der oberen Hierarchieebene A erscheinen.

## Patentansprüche

1. Verfahren beim Betreiben eines Mobilfunknetzes (10) mit menügesteuerten Mobilfunkendgeräten (18a), bei denen eine hierarchische Menüführung (24) mit Menüpunkten (26) als Mobilfunk-Portal (22) in einer computergesteuerten Zentraleinheit (20) verwaltet wird, die Auswahl (23) eines jeden Menüpunkts (26) des Mobilfunk-Portals (22) in der Zentraleinheit (20) zum Erfassen und Auswerten (38) des Nutzungsverhaltens von Nutzern des menügesteuerten Mobilfunk-Portals (22) aufgezeichnet wird, und die hierarchische Menüführung (24) nutzerindividuell durch das so erfasste Nutzungsverhalten angepasst wird, **dadurch gekennzeichnet, dass** der Auswahl (23) eines Menüpunkts (26) ein Zeitwert und/oder eine Ortkoordinate zugeordnet wird, wobei die Anpassung der hierarchischen Menüführung durch Verschiebung eines Menüpunkts (26) in Hierarchieebenen des Menüs zeit- und/oder ortsabhängig erfolgt.

2. Verfahren beim Betreiben eines Mobilfunknetzes (10) mit menügesteuerten Mobilfunkendgeräten (18a) nach Anspruch 1, **dadurch gekennzeichnet, dass** das Nutzungsverhalten numerisch und/oder grafisch ausgewertet wird.

3. Verfahren beim Betreiben eines Mobilfunknetzes mit menügesteuerten Mobilfunkendgeräten (18a) nach einem der Ansprüche 1 oder 2, **dadurch gekennzeichnet, dass** die am häufigsten benutzen Menüpunkte (40) der hierarchischen Menüführung (24) zuerst erreichbar sind.

## Claims

1. A method in operating a mobile network (10) with menu-driven mobile terminals (18a) in which a hierarchic menu guidance (24) with menu items (26) is administrated in a computer-controlled central unit (20) as mobile radio portal (22), the selection (23) of each menu item (26) from the mobile radio portal (22) in the central unit (20) is registered for acquiring and analysing (38) the user behaviour of users of the menu-driven mobile radio portal (22), and the hierarchic menu guidance (24) is customised individually by the registered user behaviour, **characterised in that** a time value and/or a location coordinate is assigned to the selection (23) of a menu item (26) and the customisation of the hierarchic menu guidance by shifting a menu item (26) in hierarchy levels of the menu is accomplished time-dependent and/or location-dependent.

2. A method in operating a mobile network (10) with menu-driven mobile terminals (18a) according to claim 1, **characterised in that** the user behaviour is analysed numerically and/or graphically.

3. A method in operating a mobile network with menu-driven mobile terminals (18a) according to one of the claims 1 or 2, **characterised in that** the menu items (40) of the hierarchic menu guidance (24) used most frequently are achievable first.

## Revendications

1. Procédé utilisé pour l'exploitation d'un réseau de radiotéléphonie mobile (10) présentant des terminaux de radiotéléphonie mobile (18a), commandés par menu, pour lesquels un menu principal (24) présentant des sous-menus (26) est géré sous forme de portail de radiotéléphonie mobile (22) dans une unité centrale commandée par ordinateur (20), la sélection (23) de chaque sous-menu (26) du portail de radiotéléphonie mobile (22) est enregistrée dans l'unité centrale (20) afin de saisir et d'exploiter (38) le comportement d'utilisation d'utilisateurs du portail de radiotéléphonie mobile (22) commandé par menu, et le menu principal hiérarchique (24) est adapté à chaque utilisateur grâce au comportement d'utilisation ainsi saisi, **caractérisé en ce qu'**une valeur de temps et/ou une coordonnée de lieu est associée à la sélection (23) d'un sous-menu (26), l'adaptation du menu principal hiérarchique par le déplacement d'un sous-menu (26) s'effectuant aux plans hiérarchiques du menu en fonction du temps et/ou du lieu.

2. Procédé utilisé pour l'exploitation d'un réseau de radiotéléphonie mobile (10) présentant des terminaux de radiotéléphonie mobile (18a), commandés par menu, selon la revendication 1, **caractérisé en ce que** le comportement d'utilisation est exploité par méthode numérique et/ou graphique.

3. Procédé utilisé pour l'exploitation d'un réseau de radiotéléphonie mobile (10) présentant des terminaux de radiotéléphonie mobile (18a), commandés par menu, selon l'une quelconque des revendications 1 ou 2, **caractérisé en ce que** les sous-menus (40) du menu principal hiérarchique (24) qui sont utilisés le plus souvent sont accessibles en premier.
